Europäisches Patentamt

European Patent Office

Office européen des brevets

(11) Publication number: **0 138 940**
**B1**

## (12) EUROPEAN PATENT SPECIFICATION

(45) Date of publication of patent specification: **18.03.87**

(51) Int. Cl.⁴: **G 01 F 23/28, G 01 S 13/34**

(21) Application number: **84901436.0**

(22) Date of filing: **05.04.84**

(86) International application number:
**PCT/NO84/00019**

(87) International publication number:
**WO 84/03942 11.10.84 Gazette 84/24**

(54) METHOD AND APPARATUS FOR MEASURING THE DISTANCE TO AN OBJECT.

(30) Priority: **05.04.83 NO 831198**

(43) Date of publication of application:
**02.05.85 Bulletin 85/18**

(45) Publication of the grant of the patent:
**18.03.87 Bulletin 87/12**

(84) Designated Contracting States:
**AT BE CH DE FR GB LI LU NL SE**

(56) References cited:
**FR-A-2 141 844**
**FR-A-2 385 085**
**GB-A-1 234 791**
**GB-A-2 083 312**
**SE-B- 381 745**
**SU-A- 972 237**
**US-A-4 218 678**

(73) Proprietor: **AUTRONICA A/S**
**Haakon VII's gate**
**N-7000 Trondheim (NO)**

(72) Inventor: **BEKKADAL, Fritz**
**Rostengrenda 145**
**N-7075 Tiller (NO)**
Inventor: **SCHAUG-PETTERSEN, Tor**
**Dalen Hageby 1**
**N-7000 Trondheim (NO)**

(74) Representative: **Betten, Jürgen Dipl.-Ing.**
**Betten & Gleiss Patentanwälte**
**Reichenbachstrasse 19**
**D-8000 München 5 (DE)**

Courier Press, Leamington Spa, England.

## 0 138 940

### Description

The invention relates to a method, as stated in the introductory part of claim 1, to determine the distance to an object, particularly to the surface of a liquid or another flowable medium in a container or similar enclosure.

Further the invention relates to a device for such a determination of distance, as stated in the introductory part of claim 10. Methods and devices as stated in the introductory part of these claims are previously known, see e.g. FR—A—2141844, FR—A—2385085, GB—A—1234791, GB—A—2083312, US—A—4044355, US—A—4218678.

The terminology used in this specification relating to microwave technology is in accordance with the definitions in IEC Standard, Publication 615: "Terminology for microwave apparatus", Geneve, Switzerland, 1976.

For the purpose stated above the following methods based on radiation of electromagnetic waves are known and used:

### Pulse radar

The signal is transmitted as short pulses. The received signal consists of a series of pulses corresponding to echoes from different distances. The signal processing consists of time and amplitude determination of the echo pulses, which requires very fast acting circuits. The resolution will increase with decreasing pulse length $\tau$. A new pulse cannot be transmitted before all significant echoes have returned. If the interval between transmission of pulses is T, the ratio of peak power to average power for the radar transmitter will be $T/\tau$. To avoid distortion of the pulses, the radar receiver should have a bandwidth $> 1/\tau$.

### Chirp radar

This type of radar differs from the pulse radar in the method of generation and detection of pulses only. The transmitted signal has a longer duration, but is frequency modulated, the frequency changing from the lowest to the highest value, or vice versa, of the pulse spectrum. In the receiver the signal is passed to a matched filter which delays the low frequencies relatively to the high ones and compresses the signal to a pulse of the same length as in a pulse radar with the same resolution. After compression, the signal processing is the same for the two systems. The chirp radar requires lower peak power than the pulse radar, but needs a matched filter.

### FM-radar

In this type of radar the transmitted signal has a constant amplitude. It is frequency modulated linearly and periodically from the lowest to the highest frequency in the band, or vice versa, similarly to the chirp radar, but the frequency scan can be of longer duration. A part of the transmitted signal is branched off and used as a local oscillator signal for a receiving mixer in which it is mixed with the reflected signal. Due to the time delay of the reflected signal, a beat frequency proportional to the distance to the reflecting object is created. Different contributions to the reflected signal appear as different frequency components in the received signal.

Analysis of the received signal is carried out in a filter bank or by means of one or more tunable filters. The receiver may be narrow-banded, but the scanning time must be short for the beat frequency to be in the low noise region of the receiver.

### Reflectometer

By this method the reflection coefficient $\rho = r \cdot e^{j\varphi}$ of the antenna is measured over a frequency range corresponding to the spectrum of the radar pulse. Here r is the module (amplitude) of the reflection coefficient and $\varphi$ its phase, e is the base of the natural logarithm and $j = \sqrt{-1}$. The reflection coefficient $\rho(f)$, where f is the frequency, is measured for a series of discrete frequencies evenly distributed over the frequency range. The measured values are fed to a microprocessor or computer performing a Fourier transformation of $\rho(f)$ from the frequency domain to the time domain. The result is a time function corresponding to the reflected signal of a pulse radar system. Systems based on this method may thus be termed synthesized pulse radar systems. The pulse will not, however, be present in real time, but contained in a data set, which implies great advantages for the signal analysis.

The present invention utilizes the reflectometer principle described above combined with a number of special methods of signal generation and processing which will give the measurements more accuracy and flexibility than existing methods and give other advantages to be described below.

Systems based on the reflectometer method cannot operate in real time, as indicated above. It is then convenient to use digital signal processing, which will give the system some characteristic features. A discrete Fourier transformation (DFT) has to be carried out, preferably with equidistant frequencies when using fast DFT-algoritms, such as "Fast Fourier Transform" (FFT). If the distance between the frequencies in this equidistant set is $\Delta f$, the time representation of the reflection coefficient $\rho(f)$ obtained by a discrete Fourier transformation will be periodic with a period $T = 1/\Delta f$. Two contributions to $\rho(f)$ with time delays $\tau_1$ and $\tau_2$ will appear at the same location in the time representation if $\tau_2 - \tau_1 = nT$, where n is an integer $(n = 0, 1, 2, \ldots)$. It is thus necessary first to choose T larger than the largest value, $\tau_{max}$, of then time delay $\tau$

2

within the measurement range. Further T should be chosen so large that no significant interfering reflections have time delays larger than T.

A simplification of the system can be achieved by measuring only the real part, $Re\{\rho(f)\}$, or only the imaginary part $Im\{\rho(f)\}$, of the complex reflection coefficient $\rho(f)$. If the phase of the reference signal, the signal to which the reflected signal from the antenna is compared, is set to 0, a reflected signal with time delay $\tau$ will give a contribution to $\rho(f)$ which is proportional to $e^{-j2f\tau}$. The real part of this contribution is $Re\{e^{-j2\pi f\tau}\} = \cos(2\pi f\tau) = 1/2[e^{j2\pi f\tau} + e^{-j2\pi f\tau}]$, which will give contributions of equal strengths at time delays $\tau$ and $-\tau$. Due to the said periodicity of the discrete Fourier transformation, the contribution with time delay $-\tau$ also appears with the time delay $T-\tau$. This means that, when only the real part or the imaginary part of $\rho(f)$ is measured, T has to be chosen so large that the maximum time delay within the range of measurement, $\tau_{max}$, is less than T/2.

A difficulty in measuring the distance to an object by using a freely radiating antenna is caused by the substantial decrease in the reflected signal with increased distance to the object. For a plane reflecting surface, as an important special case, the amplitude of the reflected signal is inversely proportional to the distance from the antenna, provided that the distance exceeds a certain threshold; while the reflected amplitude for an object of small angular extension is inversely proportional to the distance squared. Such is the case when the medium between the antenna and the object is loss free. If electromagnetic waves are significantly attenuated in the said medium, the amplitude of the received signal will decrease more strongly with distance than stated above.

Problems related to digital signal processing arise particularly when the desired signal is only a small fraction of the total signal. A large resolution is then needed, i.e. a large number of digits in the digital representation of the signal. A considerable improvement in this respect is achieved by the present invention which, instead of using the values of the reflection coefficient of the antenna itself in the Fourier transformation, utilizes a function of the reflection coefficient which is adapted to the system configuration and to the type of object to be measured, and then performs a Fourier transformation of this function.

When measuring towards a plane surface through a medium with low attenuation, the optimum choice of function is the derivative of the reflection coefficient $\rho(f)$, with respect to frequency, i.e.

$$\rho'(f) = \frac{d\rho(f)}{df},$$

as the following calculation will show:

If $F\{x\}$ is the Fourier transform of $x$ and

$$F\{\rho(f)\} = R(\tau) \tag{1},$$

then

$$\frac{1}{2\pi j} F\{\rho'(f)\} = \tau \cdot R(\tau) \tag{2}$$

This shows that by using the derivative of $\rho(f)$, the contribution from larger distances will be emphasized relatively to the contribution from smaller distances and be in proportion to this distance. The echo amplitude from a large, plane surface will then be independent of the distance from the antenna.

In a practical case, not $\rho'(f)$, but the differential of $\rho(f)$, $\Delta\rho(f)$ will be measured, by subtracting the values of $\rho(f)$ at 2 frequencies differing by $f_d$

$$\Delta\rho(f) = \rho\left(f + \frac{fd}{2}\right) - \rho\left(f - \frac{fd}{2}\right) \tag{3}$$

This process should be carried out before the analog to digital signal conversion in order to obtain the abovementioned reduction in the necessary digital resolution.

To obtain the differential of $\rho(f)$ or its real or imaginary part, the following method is convenient:
The microwave signal input to the antenna changes between two frequencies whose difference is

$$f_d, f_1 = f - \frac{fd}{2} \quad \text{and} \quad f_2 = f + \frac{fd}{2},$$

where $f$ is the nominal measurement frequency. The signal reflected from the antenna terminal is fed to a detection circuit whose output voltage V is proportional to, e.g., $Re\{\rho\}$. When the frequency varies between

3

$f_1$ and $f_2$, V will vary between $V_1 \sim \mathrm{Re}\{\rho(f_1)\}$ and $V_2 \sim \mathrm{Re}\{\rho(f_2)\}$. The voltage $\Delta V = V_2 - V_1$ is then a measure of $\mathrm{Re}\{\rho(f_2)\} - \mathrm{Re}\{\rho(f_1)\}$. Similarly a higher differential can be formed by changing the frequency between n values $f_1, f_2, \ldots, f_n$, and selecting a suitable linear combination of the corresponding detected voltages $V_1$, $V_2, \ldots, V_n$.

To achieve a high accuracy in the measurement according to the present invention, it is necessary to know the frequencies at which the values of the function of the antenna input reflection coefficient are measured, the measurement frequencies, with high accuracy. This can in principle be obtained by synthesizing the measurement frequencies or by using e.g. a frequency counter of sufficient accuracy. These methods will, however, be both expensive and time consuming, and the following method is chosen in the present invention:

The microwave signal is generated by a voltage controlled oscillator (VCO), and the control voltage varies to increase or decrease the frequency substantially linearly with time. The measurements may then suitably be taken at constant intervals of time. The signal is split in two equal parts, one part being used for measuring the reflection from an impedance element, the reference impedance, whose reflection coefficient is a known function of frequency. The frequency impedance is measured at the same or at some of the same frequencies as the antenna.

If the reflection coefficient $\rho_r$ of the reference impedance at the frequency of measurement $f_k$ is $\rho_{rk}$, $f_k$ is determined by solving the equation:

$$\rho_{rk} = \rho_r(f_k) \tag{4}$$

wherein $\rho_r(f)$ expresses the known frequency dependence of $\rho_r$. The frequency f would then in principle have to be a single-valued function of $\rho_r$ over the total frequency range. If it is known, however, that $f_k$ lies between two frequencies $f_a$ and $f_b$, the distance between which being less than the total frequency range, it is sufficient that f is a single-valued function of $\rho_r$ in the frequency range $f_a$ to $f_b$.

This method will normally not ensure equidistant measurement frequencies, and suitable interpolation routines are used when an equidistant set of frequencies is needed, as for an FFT-algorithm.

In the preceding, it is assumed that the object being measured is stationary. If the object is moving, as, e.g., the surface of a liquid in a container being filled or emptied, errors of measurement may occur.

Assume that the measurement is carried out in the frequency range $(f_o - \Delta F/2, f_o + \Delta F/2)$, i.e. in a frequency range of width $\Delta F$ around the center frequency $f_o$, and that the duration of the measurement is $T_o$. If the distance to be measured changes from $h_1$ to $h_2$ during the time $T_o$, the phase of the reflection coefficient changes from $\varphi_1 = 4\pi(f_o - \Delta F/2)h_1/c$ to $\varphi_2 = 4\pi(f_o + \Delta F/2)h_2/c$ where c is the velocity of light in the medium between the antenna and the object, provided that the measurement is made with increasing frequency.

The phase change will then be:

$$\Delta\varphi = \varphi_2 - \varphi_1 = 2\pi\Delta F \frac{h_1 + h_2}{c} + 4\pi f_o \frac{h_2 - h_1}{c} \tag{5}$$

This should be compared to the phase change for an object at rest at a distance h, which will be $4\pi\Delta Fh/c$ by making $h_1 = h_2 = h$ in (5). The apparent distance to the moving object will then be:

$$h = \frac{h_1 + h_2}{2} + \frac{f_o}{\Delta F}(h_2 - h_1) = h_m + \frac{f_o}{\Delta F}(h_2 - h_1) \tag{6}$$

In this equation the average distance

$$h_m = \frac{h_1 + h_2}{2}$$

is the natural definition of the distance to a moving object, the expression $(f_o/\Delta F)(h_2 - h_1)$ represents the error.

If e.g. $f_o/\Delta F$ is equal to 10, e.g. an error of measurement results which is 10 times the change of distance during the time of measurement. This error can be eliminated by making another measurement with the frequency decreasing from $f_o + \Delta F/2$ to $f_o - \Delta F/2$ during the time of measurement $T_o$. If the object is moving at an even rate, the last measurement will give an error with the same absolute value at the first, but of opposite sign. By averaging the two measurements, a distance is determined, which corresponds to the distance in the middle of the total period of measurement.

The objects of the invention are achieved by carrying out the method according to claim 1. Further features of the invention, including a device for carrying out the method, are described in the dependent claims.

The invention will be described in more detail with reference to the accompanying drawings, which show possible realizations of the invention:

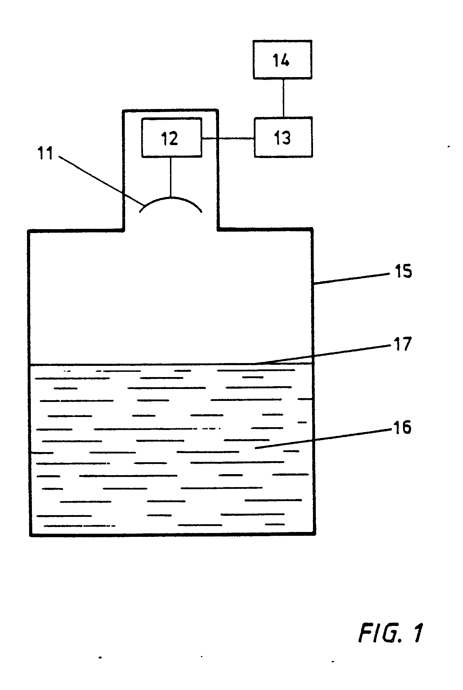

Fig. 1 shows schematically the layout of a device according to the invention for measuring the level in a container, comprising an antenna 11, a measuring unit 12, a channel unit 13 and a monitoring unit or central unit 14, which will all be further described below. In the case that the object to be measured is the level 17 of the liquid 16 in a container 15, the antenna is placed at the top of the container as shown.

Figs. 2 to 4 show block diagrams of some realizations of the measuring unit 12 of Fig. 1.

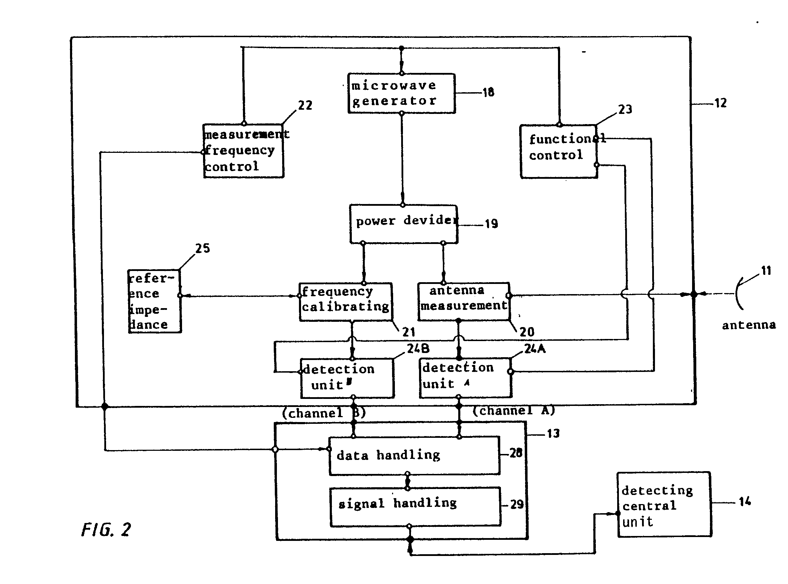

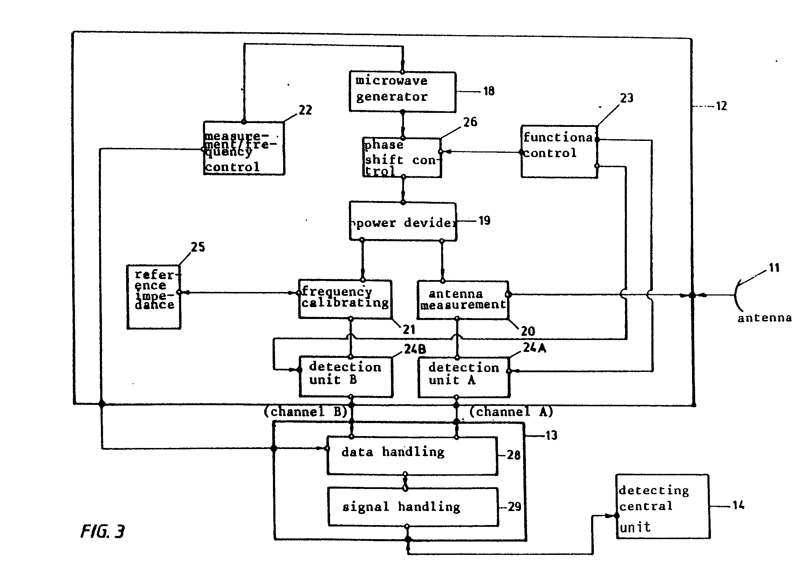

The measuring unit according to Fig. 2 functions as follows: In the measuring unit 12 a microwave signal is generated by a microwave generator 18, which may be a voltage controlled oscillator, and is split in a power divider 19 between an antenna measurement unit 20 in channel A and a frequency calibration unit 21 in channel B. The control voltage for the microwave generator 18 is provided by a frequency control unit 22, which makes the signal frequency assume a set of nominal values. To produce the set of frequencies around each measuring frequency, which is needed to create the described function of the antenna reflection coefficient, an additional voltage from a function control unit 23 is superimposed upon the control voltage. This voltage is also input to the detection units 24A and 24B, to give the contribution from each frequency the desired weight.

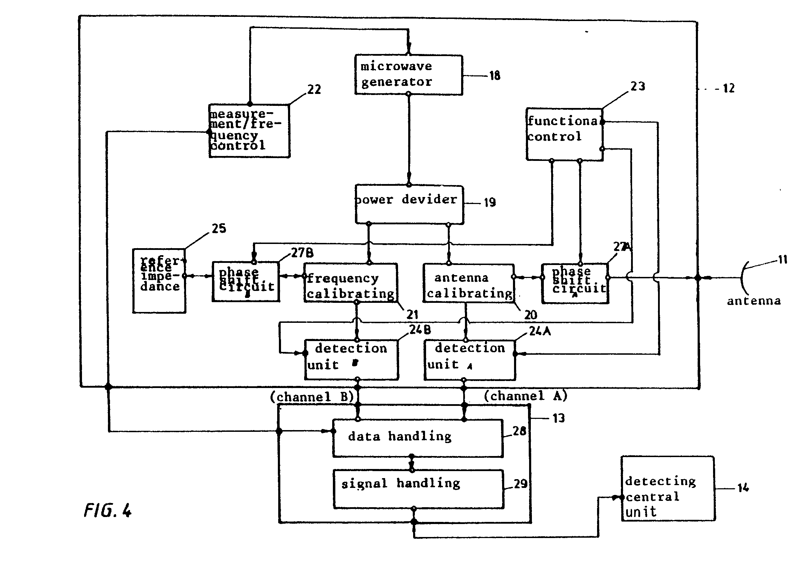

The circuit of Fig. 3 differs from that of Fig. 2 is the manner of production of the set of frequencies around each measurement frequency. In a steered phase shifter 26 the phase of the microwave signal is increased by $\psi$ during an interval $T_1$. The frequency of the microwave signal will then increase by

$$\Delta f = \frac{\psi}{T_1} .$$

By varying $\psi$ and/or $T_1$ the frequency change can be controlled and the desired set of frequencies generated. It is not necessary, however, to increase the phase linearly with the time in the interval $T_1$, the phase may be increased in one or several steps, by means of a multiple phase modulator.

The circuit of Fig. 4 differs from that of Fig. 3 by using two steered phase shifters 27A and 27B, one for the signals to the antenna, and one for the signals to the reference impedance. It will then be possible to use different functions for the two channels, A and B.

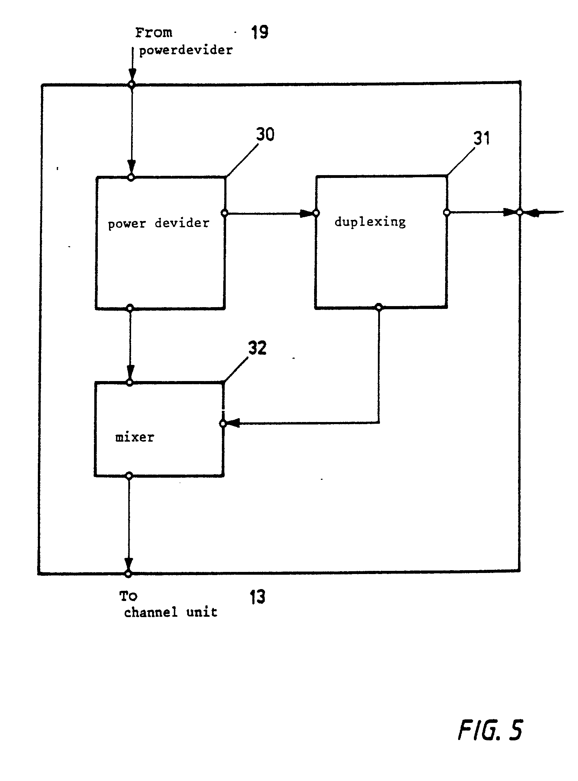

The antenna measuring unit 20 and the frequency calibration unit 21 may be embodied as reflectometers. In Fig. 5 is shown a block diagram for an embodiment of a reflectometer. The microwave signal from the power divider 19 is input to a second power divider 30. A part of the signal is used as a reference signal (local oscillator) in a mixer 32, while another part is input to a duplexing circuit 31. From the duplexing circuit 31 the signal is transmitted to the impedance to be measured, the reflected signal being transferred from the duplexing unit 31 to the mixer 32, in which it is mixed with the reference signal, producing a low frequency signal going to the detection unit 24 (24A and 24B).

The detected signals in channel A (from the antenna measuring units 20), and in channel B (from the frequency calibrating unit 21) are converted from analog to digital form in unit 13 and stored in a data memory or register in a data aquisition unit 28, to make the measured data from the two channels available for further processing in a signal processing unit 29.

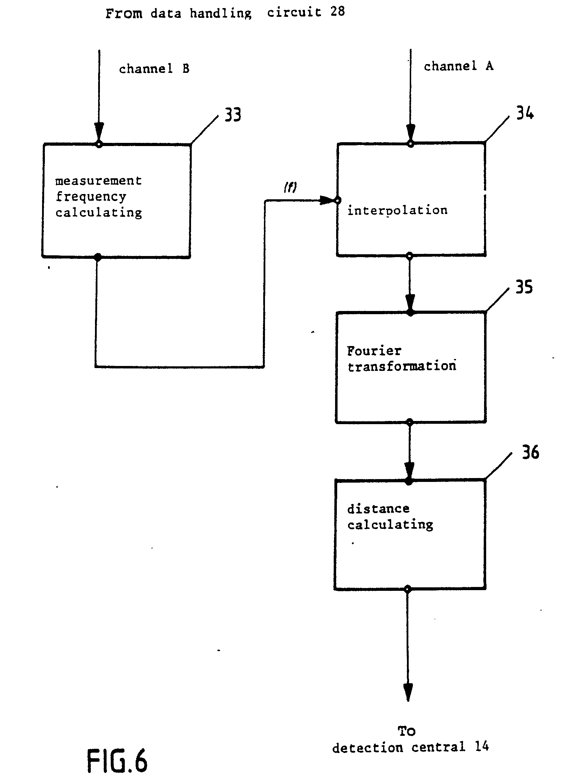

A schematic diagram showing the main functions of the signal processing unit 29 is shown in Fig. 6. These will be further described below.

From the data aquisition unit 31 values of the described function of the reflection coefficient of the antenna at a finite number discrete frequencies within a certain range of frequencies are present in channel A and values of the described function of the reflection coefficient for the reference impedance at the same or some of the same measuring frequencies in channel B.

By the data from channel B, the measuring frequencies (f) are determined by a routine 33 for frequency calculation. These frequencies are used in an interpolation routine 34 to find values of the described function for channel A at a given set of frequencies which is compatible with the subsequent signal processing, in the case that this set of frequencies and the set of measurement frequencies are not identical. This set of function values are then Fourier transformed, followed by a selection of the contribution from the object and calculation of the distance by means of routines 36, adapted to the signal, and utilizing previously established data for the measurement path.

The measurements and calculations are carried out as described for two sequences in rapid succession, one for increasing frequencies and the other for decreasing, to eliminate errors due to uniform change in the distance to the object during the interval of measurement, by a process of averaging included in the processing routines 36.

By the monitoring unit 14 the various other units and circuits are monitored and controlled, parallel to the computation of other user data based on data from the signal processing unit in the described channel unit 13, as well as from tables of information stored, other calculating units, sensors etc.

The monitoring unit 14 may handle several of the described channel units by using a multiplexing circuit between the channel units and the detector unit to select in turn each of the channel units connected in parallel to the multiplexing circuit.

Correspondingly the channel unit 13 can be used for several measuring units with a multiplexing circuit between the measuring units and the channel unit, or the signal processing unit 29 of the channel unit 13 can be used for several data aquisition units, each connected to a measuring unit, by using a multiplexing circuit between the data aquisition units and the signal processing unit.

## Claims

1. Method for measuring the distance to the surface of an object, particularly for determining the distance to the surface of a liquid or another flowable medium in a container or similar environment, wherein a microwave signal with predetermined frequency is generated, a part of which is used as a reference signal, while a second part is fed to an antenna, which is directed against said surface at a distance therefrom, whereby the surface and other objects present influence the input impedance of the antenna and the corresponding input reflection coefficient through their distance dependent contributions to the said reflection coefficient characterized by a function of the input reflection coefficient being formed as a combination of values of the reflection coefficient at at least two different frequencies in an interval around the nominal frequency of measurement, the combination being chosen in such a manner that contributions to the said function from objects at certain distances being emphasized relative to contributions from objects at other distances, in that a Fourier transformation is made starting with a set of values of this function at a chosen set of frequencies, in that the different contributions of the objects to the function resulting from the Fourier transformation being separated according to the different distances from the antenna of the objects from which the said contributions originated, in that contributions from fixed objects being eliminated, their contributions to the Fourier transformed function being known, and thereby the contribution of the surface being selected on account of its strength and/or position, to enable the determination of the distance to the surface.

2. Method according to claim 1, characterized by the said function being chosen, when measuring the distance to a plane surface, as the differential of the input reflection coefficient of the antenna or of its real or imaginary part, the said differential being defined as the derivative with respect to frequency of the reflection coefficient and approximated by the difference between the values of the reflection coefficient at two different frequencies within an interval around the nominal frequency of measurement.

3. Method according to claim 1, characterized by the said function being chosen, when measuring the distance to an object of limited angular extension relative to the directions from the antenna, as the second order differential of the complex input reflection coefficient of the antenna, the said differential being defined as the second derivative with respect to frequency of the reflection, and approximated by a corresponding linear combination of the values of the reflection coefficient at three or more different frequencies in interval around the nominal frequency of measurement.

4. Method according to one of the claims 1—3, characterized by the said function being chosen, when measuring the distance to an object surrounded by a medium in which the electromagnetic waves are substantially attenuated, as a combination, adapted to the measuring situation, of differentials of different orders of the reflection coefficient, the differentials being defined as with respect fo frequency deviations of corresponding orders the respect to frequency of the reflection coefficient, being approximated by a combination of values of the reflection coefficient at a corresponding number of frequencies within an interval around the nominal frequency of measurement.

5. Method according to one of the claims 1—4, characterized by a set of values of the said function being formed, the said set consisting of the values of the function at a chosen set of discrete frequencies within a chosen range, and a discrete Fourier transformation of the said set of values being performed, the set of frequencies being chosen so as to achieve a certain accuracy and to ensure that the indication of distance is unambiguous within the chosen range of measurement.

6. Method according to claim 1, wherein the values of the said measurement frequencies, at which the values of the said function is measured, are not accurately known at the time of measurement, characterized by the said set of measurement frequencies being sufficiently dense to allow interpolation of the values of the said function at intermediate frequencies, by the values of the said function being measured for a suitable, frequency dependent impedance element, the reference impedance, for the same, or part of the same set of measuring frequencies, by the values of the measuring frequencies being accurately determined from the measurements of the reference impedance, and by the values of the said function of the antenna input reflection coefficient being calculated for another set of frequencies adapted to the subsequent signal processing.

7. Method according to claim 1, characterized by the sequence of measurements to obtain values of the said function being carried out twice in close succession, once with a sequence of increasing measuring frequencies and once with decreasing frequencies, or vice versa, in order to eliminate errors due to a possible change of the distance to the object during the time of measurement.

8. Method according to one of the claims 1—5, characterized by the values of the reflection coefficient used in the said function being obtained by feeding a signal with a single frequency component to the antenna, the frequency of this component taking on a sequence of values in an interval around the nominal measuring frequency, and by detector circuits being used to obtain the values of the said function, in which circuits the reflected signal is mixed with a reference signal, the detector circuits being synchronized with the time variation of the transmitted signal and being designed to produce a weighted sum of the different values of the reflection coefficient, whereby the desired value of the said function appears after detection.

9. Method according to one of the claims 1—5, characterized by the values of the reflection coefficient used to obtain the value of the said function being found by letting the signal fed to the antenna be composed of at least two frequency components whose frequencies take on, in time sequence, a set of values in an interval around the nominal measuring frequency, and by detector circuits being used to obtain the values of the said function, in which circuits the reflected signal is mixed with a reference signal, the detector circuits being synchronized with the time variation of the transmitted signal and being designed to produce a weighted sum of the different values of the reflection coefficient, whereby the desired value of the said function appears after detection.

10. Device for carrying out measurements according to claim 1, comprising an antenna (11) placed at a distance from, and pointing towards a surface (17), whose distance from the antenna is to be determined, a measuring unit (12) and signal processing circuits (28, 29), characterized by comprising a controllable frequency microwave generator (18), a frequency steering unit (23) and detection units (24A, 24B) to form the said function of the antenna input reflection coefficient for a set of discrete measuring frequencies within a certain frequency range, and by the signal processing circuits comprising means to perform a Fourier transformation of the set of function values, to process the data obtained and to calculate the distance to be determined.

11. Device according to claim 10, characterized in that it comprises one or more controlled phase shift circuits (26, 27A, 27B) to form the described function.

12. Device according to claim 10 and 11, characterized in that the measuring unit (12) comprises a signal divider (19) splitting up the signal from the microwave generator (18) to an antenna measuring unit (20) and to a frequency calibrating unit (21) which are both connected to detection units (24A, respectively 24B) which in turn are connected to the data processing unit (28) for transforming the signals detected from the antenna measuring unit (20) and from the frequency calibrating unit (21) into digital form and to supply these signals to the signal handling unit (29).

13. Device according to one of the claims 10—12, characterized in that the circuitry for forming the described function of the reflection coefficient comprises means (22, 23, 26, 27A, 27B) for changing the amplitude, frequency and/or phase of the microwave signal and detector circuits (24A, 24B) synchronized with the signal supplied to the antenna and/or to reference impedance.

14. Device according to one of the claims 12 or 13, characterized in that the antenna measuring unit (20) and the frequency calibrating unit (21) each comprise a reflectometer, the antenna measuring unit (20) containing a duplexing circuit (31) connected to the antenna (11), while in the frequency calibrating unit (21) a duplexing circuit is connected to a frequency dependent reference impedance element.

**Patentansprüche**

1. Verfahren zum Messen des Abstands zu der Oberfläche eines Objekts, insbesondere zur Bestimmung des Abstands zur Oberfläche einer Flüssigkeit oder eines anderen fließfähigen Mediums in einem Behälter oder einem ähnlich abgeschlossenen Raum, bei dem ein Mikrowellensignal mit vorbestimmter Frequenz erzeugt wird, von dem ein Teil als Bezugssignal verwendet und ein zweiter Teil der Antenne zugeführt wird, die gegen die Oberfläche gerichtet und in einem Abstand dazu angeordnet ist, wobei die Oberfläche und andere vorhandene Objekte die Eingangsimpedanz der Antenne und den entsprechenden Eingangsreflexionskoeffizienten über ihre abstandsabhängigen Beiträge zum Reflexionskoeffizienten beeinflussen, dadurch gekennzeichnet, daß eine Funktion des Eingangsreflexionskoeffizienten der Antenne durch eine Kombination von Werten des Reflexionskoeffizienten bei mindestens zwei Frequenzen in einem Intervall um eine Nennmeßfrequenz herum so gebildet wird, daß die Beiträge zu dieser Funktion von den Objekten in bestimmten Abständen relativ zu Beiträgen von Objekten in anderen Abständen betont bzw. bewertet werden, daß eine Fouriertransformation bezüglich einer Reihe von Werten dieser Funktion beginnend mit einer vorbestimmten Reihe von Meßfrequenzen durchgeführt wird, daß die Beiträge der verschiedenen Objekte zur fouriertransformierten Funktion entsprechend ihren verschiedenen Abständen zur Antenne aufgetrennt werden, daß feste Beiträge von anderen Objekten, deren Beiträge zur Fouriertransformierten Funktion bekannt sind, eliminiert werden und dadurch der Beitrag der Oberfläche aufgrund seiner Stärke und/oder Position herausdividiert wird, um die Bestimmung des Abstands zur Oberfläche zu ermöglichen.

2. Verfahren nach Anspruch 1, dadurch gekennzeichnet, daß die beschriebene Funktion beim Messen des Abstands zu einer ebenen Oberfläche als Differential des komplexen Eingangsreflexionskoeffizienten der Antenne oder dessen realen oder imaginären Teils gebildet wird, wobei das Differential als Ableitung nach der Frequenz des Reflexionskoeffizienten definiert oder als Differenz zwischen den Werten des Reflexionskoeffizienten bei zwei verschiedenen Frequenzen in einem Intervall um die Nennmeßfrequenz herum angenähert wird.

3. Verfahren nach Anspruch 1, dadurch gekennzeichnet, daß die beschriebene Funktion beim Messen des Abstands zu einem Objekt mit einem begrenzten Winkelmaß relativ zur Ausrichtung der Antenne als Differential zweiter Ordnung des Eingangsrflexionskoeffizienten der Antenne gebildet wird, wobei das Differential zweiter Ordnung als zweite Ableitung nach der Frequenz des Reflexionskoeffizienten definiert und als eine entsprechende Linearkombination der Werte des Reflexionskoeffizienten bei drei oder mehr aufeinanderfolgenden Frequenzen in einem Interval um die Nennmeßfrequenzy herum angenähert wird.

4. Verfaharen nach einem der Ansprüche 1 bis 3, dadurch gekennzeichnet, daß die beschriebene Funktion beim Messen des Abstands von Objekten, die von einem Medium umgeben sind, in dem die elektromagnetischen Wellen stark gedämpft werden, als eine an die bestehende Dämpfung angepaßte Kombination von Differentialen verschiedener Ordnung des Eingangsreflexionskoeffizienten der Antenne gewählt wird, wobei das allgemeine Differential n-ter Ordnung als die Ableitung n-ter Ordnung des Antenneneingangsreflexionskoeffizienten nach der Frequenz definiert oder als entsprechende Kombination von Werten des Reflexionskoeffizienten bei entsprechenden Frequenzen in einem Intervall um die Nennmeßfrequenz herum angenähert wird.

5. Verfahren nach einem der Ansprüche 1 bis 4, dadurch gekennzeichnet, daß die Werte der beschriebenen Funktion des Antenneneingangsreflexionskoeffizienten für eine endliche Anzahl diskreter Meßfrequenzen innerhalb eines begrenzten Frequenzbereiches gebildet werden und daß dann eine diskrete Fouriertransformation der Werte der Funktion durchgeführt wird, wobei die Meßfrequenzen so gewählt werden, daß eine vorbestimmte Gernauigkeit erreicht und das Meßergebnis im gewählten Meßbereich eindeutig ist.

6. Verfahren nach Anspruch 1, bei dem die Meßfrequenzen, bei denen die Werte der Funktion des Eingangsreflexsionskoeffizienten der Antenne bestimmte werden, zum Zeitpunkt der Messung nicht genau bekannt sind, dadurch gekennzeichnet, daß die Meßfrequenzen ausreichend nahe beieinander gewählt werden, um eine Interpolation der Funktionswerte bei Zwischenfrequenzen zu ermöglichen, daß Funktionswerte für ein geeignet ausgewähltes, frequenzabhängiges Impedanzelement als Bezugsimpedanz bei den gleichen oder einem Teil der gleichen Meßfrequenzen bestimmit werden, und daß die Meßfrequenzen aus Messungen an der Bezugsimpedanz genau bestimmt werden und daß die Funktionswerte des Eingagnsreflexionskoeffizienten der Antenne bei einer anderen Reihe von Frequenzen, angepaßt an die nachfolgende Signalverarbeitung, berechnet werden.

7. Verfahren nach Anspruch 1, dadurch gekennzeichnet, daß die Meßfolge zur Bestimmung der Werte der beschriebenen Funktion zweimal kurz hintereinander durchgeführt wird, das erste Mal mit einer steigenden Meßfrequenz und das zweite Mal mit einer abnehmenden Meßfrequenz oder umgekehrt, um die Fehler aufgrund einer Änderung des Abstands zum Objekt während der Messung zu eliminieren.

8. Verfahren nach einem der Ansprüche 1 bis 5, dadurch gekennzeichnet, daß die zur Bildung der beschriebenen Funktion verwendeten Werte des Reflexionskoeffizienten derart bestimmt werden, daß man eine Frequenzkomponente des der Antenne zugeführten Signals eine Reihe von Frequenzwerten in einem Intervall um die Nennmeßfrequenz herum annehmen läßt, und daß Detektorschaltungen vorgesehen werden, die zur Bildung der Funktionswerte dienen und in denen das reflektierte Signal und das Bezugssignal gemischt werden und die, mit der zeitlichen Änderung des übertragenen Signals synchronisiert und daz verwendet werden, eine gewichtete Summe der Werte des Reflexionskoeffizienten zu erzeugen, um den gewünschten Wert der Funktion nach ihrer Erfassung zu erhalten.

9. Verfahren nach einem der Ansprüche 1 bis 5, dadurch gekennzeichnet, daß die Werte des zur Bildung der beschriebenen Funktion verwendeten Reflexionskoeffizienten dadurch erhalten werden, daß das der Antenne zugeführte Signal aus mindestens zwei Frequenzkomponenten zusammengesetzt ist, die nacheinander eine Reihe von Werten in einem Intervall um die Nennmeßfrequenz herum annehmen, und daß Detektorschaltung zur Bildung der Funktionswerte verwendet werden, in denen das reflektierte Signal mit dem Bezugssignal gemischt wird, die mit der zeitlichen Änderung des übertragenen Signals s synchronisiert werden und die dazu verwendet werden, eine gewichtete Summe der Werte des Reflexionskoeffizienten zu erzeugen, um den gewünschten Wert der Funktion nach ihrer Erfassung zu erhalten.

10. Vorrichtung zur Durchführung des Verfahrens nach Anspruch 1 mit einer Antenne (11), die in einem Abstand zu einer Oberfläche (17), deren Abstand zur Antenne bestimmt werden soll, angeordnet und gegen diese gerichtet ist, einer Meßeinheit (12) und Signalverarbeitungsschaltungen (28, 29), dadurch gekennzeichnet, daß sie einen frequenzgesteuerten Mikrowellengenerator (18), eine Funktionssteuereinheit (23) sowie Detektoreinheiten (24A, 24B) zur Bildung der breschriebenen Funktion des Eingangsreflexionskoeffizienten der Antenne bei einer Anzahl von diskreten Meßfrequenzen innerhalb eines bestimmten Frequenzbereiches aufweist, und daß die Signalverarbeitungsschaltung Mittel zur Durchführung einer Fouriertransformation bezüglich der Werte der Funktion aufweisen und zur Verarbeitung der gelieferten Daten und zur Berechnung des zu bestimmenden Abtands dienen.

11. Vorrichtung nach Anspruch 10, gekennzeichnet durch, eine oder mehrere gesteuerte Phasenverschiebungsschaltungen (26, 27A, 27B) zur Bildung der beschriebenen Funktion.

12. Vorrichtung nach einem der Ansprüche 10 und 11, dadurch gekennzeichnet, daß die Meßeinheit (12) einen Signalteiler (19) aufweist, der das Signal des Mikrowellengenerators (18) zwischen einer Antennenmeßeinrichtung (20) und einer Frequenzkalibriereinrichtung (21) aufteilt, die beide mit dem Detektoreinrichtungen (24A, bzw. 24B) verbunden sind, die wiederum mit einer Datenverarbeitungseinrichtung (28) verbunden sind, um die von der Antennenmeßeintungseinrichtung (28) verbunden sind, um die von der Antennenmeßeinrichtung (20) und der Frequenzkalibriereinrichtung (21) erfaßten Signale in digital Form umzuwandeln und der Signalverarbeitungseinrichtung (29) zuzuführen.

13. Vorrichtung nach einem der Ansprüche 10 bis 12, dadurch gekennzeichnet, daß die Schaltung zur Bildung der beschriebenen Funktion des Reflexionskoeffizienten Mittel (22, 23, 26, 27A, 27B) zur Änderung

**0 138 940**

der Amplitude, der Frequenz und/oder der Phase des Mikrowellensignals und Detektorschaltungen (24A, 24B) aufweist, die mit dem der Antenne und/oder der Bezugsimpedanz zugeführten Signal synchronisiert sind.

14. Vorrichtung nach Anspruch 12 oder 13, dadurch gekennzeichnet, daß die Antennenmeßeinrichtung (20) und die Frequenzkalibriereinrichtung (21) jeweils ein Reflektometer aufweisen, wobei die Antennenmeßeinrichtung (20) eine mit der Antenne (11) verbundene Duplexschaltung (31) und die Frequenzkalibriereinrichtung (21) eine mit einem frequenzabhängigen Bezugsimpedanzelement verbundene Duplexschaltung aufweisen.

## Revendications

1. Procédé pour mesurer la distance à la surface d'un objet, en particulier pour déterminer la distance à la surface d'un liquide ou de tout autre milieu fluide se trouvant dans un récipient ou dans un environnement analogue, dans lequel on produit un signal microonde de fréquence prédéterminée dont une partie est utilisée comme signal de référence, tandis que l'autre partie est appliquée à une antenne dirigée vers la surface à une certaine distance de celle-ci, de sorte que la surface ci-dessus et les autres objet présents influencent l'impédance d'entrée de l'antenne et le coefficient de réflexion d'entrée correspondant, par l'intermédiaire de leurs contributions, dépendant de la distance, au coefficient de réflexion, procédé caractérisé ence qu'une fonction du coefficient de réflexion d'entrée est obtenue sous la forme d'une combinaison de valeurs due coefficient de réflexion à deux fréquences différentes au moins se situant dans un intervalle entourant la fréquence nominale de mesure, la combinaison étant choisie de façon que les contributions à la fonction, des objets placés à d'autres distances, en ce qu'une transformation de Fourier est effectuée à partir d'un ensemble de valeurs de cette fonction pour un ensemble choisi de fréquences, en ce que les différentes contributions des objets à la fonction résultant de la transformation de Fourier, sont séparées, suivant les différentes distances à l'antenne des objets dont les contributions ont été issues, en ce que les contributions des objets fixes sont supprimées, leurs contributions à la fonction transformée de Fourier étant connues, ce qui permet ainsi, par la contribution de la surface choisie, compte tenu de sa force et/ou de sa position, de déterminer la distance à cette surface.

2. Procédé selon la revendication 1, caractérisé en ce que la fonction est choisie, lorsqu'on mesure la distance à une surface plane, comme la différentielle du coefficient de réflexion d'entrée complexe de l'antenne ou de sa partie réelle ou imaginaire, cette différentielle étant définie comme la dérivée, par rapport à la fréquence, du coefficient de réflexion, et approchée par la différence entre les valeurs du coefficient de réflexion à deux fréquences différentes dans un intervalle entourant la fréquence nominale de mesure.

3. Procédé selon la revendication 1, caractérisé en ce que la fonction est choisie, lorsqu'on mesure la distance à un objet d'extension angulaire limitée par rapport aux directions de l'antenne, comme la différentielle du second ordre du coefficient de réflexion d'entrée complexe de l'antenne, cette différentielle étant définie comme la dérivée seconde de la réflexion par rapport à la fréquence, et approchée par une combinaison linéaire correspondante des valeurs du coefficient de réflexion à trois fréquences différentes ou plus dans un intervalle entourant la fréquence nominale de mesure.

4. Procédé selon l'une quelconque des revendications 1 à 3, caractérisé en ce que la fonction est choisie, lorsqu'on mesure la distance à un objet entouré par un milieu dans lequel les ondes électromagnétiques sont nettement atténuées, comme une combinaison, adaptée aux conditions de mesure, de différentielles de différents ordres du coefficient de réflexion, ces différentielles étant définies, par rapport aux écarts de fréquence des orderes correspondants, comme la dérivée du coefficient de réflexion par rapport à la fréquence, et se trouvant approchées par une combinaison de valeurs du coefficient de réflexion à un nombre de fréquences correspondant, dans un intervalle entourant la fréquence nominale de mesure.

5. Procédé selon l'une quelconque des revendications 1 à 4, caractérisé en ce qu'on forme un ensemble de valeurs de la fonction, cet ensemble étant constitué par les valeurs de la fonction pour un ensemble choisi de fréquences discrètes dans une plage choisie, et en ce qu'on effectue une transformation de Fourier discrète de cet ensemble de valeurs, l'ensemble de fréquences étant choisi de manière à obtenir une certaine précision et à s'assurer que l'indication de distance n'est past ambigüe dans la plage de mesure choisie.

6. Procédé selon la revendication 1, dans lequel les valeurs des fréquences de mesure pour lesquelles les valeurs de la fonction sont mesurées, ne sont pas connues avec précision au moment de la mesure, procédé caractérisé en ce que l'ensemble de fréquences de mesure est suffisamment dense pour permettre une interpolation des valeurs de cette fonction à des fréquences intermédiaires, en ce que les valeurs de cette fonction sont mesurées pour un éléments d'impédance convenable dépendant de la fréquence, constituant l'impédance de référence, pour ce même ensemble de fréquences de mesure, en ce que les valeurs des fréquences de mesure sont déterminées avec précision à partir des mesures de l'impédance de référence, et en ce que les valeurs de cette fonction du coefficient de réflexion d'entrée de l'antenne sont calculées pour un autre ensemble de fréquences adapté au traitement du signal ultérieur.

7. Procédé selon la revendication 1, caractérisé en ce que la séquence de mesures pour obtenir les valeurs de la fonction, est effectuée deux fois à intervalle de temps très court, une fois avec une séquence de fréquences de mesure croissantes, et une fois avec une séquence de fréquences de mesure décroissantes, ou vice versa, pour supprimer les erreurs dues à un changement possible de la distance à l'objet pendant le temps de la mesure.

8. Procédé selon l'une quelconque des revendications 1 à 5, caractérisé en ce que les valeurs du coefficient de réflexion utilisé dans la fonction, sont obtenues envoyant à l'antenne un signal de composante de fréquence unique, la fréquence de cette composante étant prise dans une séquence de valeurs situées dans un intervalle entourant la fréquence de mesure nominale, et en ce que des circuits détecteurs sont utilisés pour obtenir les valeurs de la fonction, le signal réfléchi étant mélangé à un signal de référence dans ces circuits détecteurs qui sont synchronisés avec les variations de temps du signal émis, et conçus pour fournir une somme pondérée des différentes valeurs du coefficient de réflexion, ce qui permet de faire appaître la valeur voulue de la fonction après détection.

9. Procédé selon l'une quelconque des revendications 1 à 5, caractérisé en ce que les valeurs du coefficient de réflexion utilisé pour obtenir la valeur de la fonction s'obtiennent en appliquant à l'antenne un signal constitué d'au moins deux composantes de fréquence, dont les fréquences sont prises, dans une séquence de temps, à l'intérieur d'un ensemble de valeurs situées dans un intervalle entourant la fréquence de mesure nominale, et en ce que des circuits détecteurs sont utilisés pour obtenir les valeurs de cette fonction, le signal réfléchi étant mélangé dans ces circuits à un signal de référence, les circuits détecteurs étant synchronisés avec la variation temporelle du signal émis, et se trouvant conçus de manière à produire une somme pondérée des différentes valeurs du coefficient de réflexion, ce qui permet de faire appaître la valeur voulue de la fonction après détection.

10. Dispositif pour effectuer les mesures selon la revendication 1, comprenant une antenne (11) pointée vers une surface (17) à une certaine distance de celle-ci, cette distance à l'antenne devant être déterminée, un bloc de mesure (12) et des circuits de traitement de signal (28, 29), dispositif caractérisé en ce quil comprend un générateur de microondes (18) à fréquence commandable, un bloc de pilotage de fréquence (23) et des blocs de détection (24A, 24B), de manière à former la fonction due coefficient de réflexion d'entrée de l'antenne pour un ensemble de fréquences de mesure discrètes situées dans une certaine plage de fréquences, et en ce que les circuits de traitement de signal comprennent des moyens permettant d'effectuer une transformation de Fourier de l'ensemble de valeurs de la fonction, pour traiter les données obtenues et calculer la distance à déterminer.

11. Dispositif selon la revendication 10, caractérisé en ce qu'il comprend un ou plusieurs circuits de déphasage commandés (26, 27A, 27B) pour former la fonction décrite.

12. Dispositif selon l'une quelconque des revendications 10 et 11, caractérisé en ce que le bloc de mesure (12) comprend un diviseur de signal (19) séparant le signal issu du générateur de microondes (18) en un signal appliqué à un bloc de mesure d'antenne 20) et un signal appliqué à un bloc d'étalonnage de fréquence, ces deux blocs étant branchés à des blocs de détection respectifs (24A, 24B) eux-mêmes branchés au bloc de traitement de données (28) destiné à transformer les signaux détectés du bloc de mesure d'antenne (20) et du bloc d'étalonnage de fréquence (21), en signaux numériques, pour appliquer ces signaux numériques au bloc de traitement de signal (29).

13. Dispostif selon l'une quelconque des revendications 10 à 12, caractérisé en ce que le circuit destiné à former la fonction, décrite ci-dessus, du coefficient de réflexion, comprend des moyens (22, 23, 26, 27A, 27B) permettant de changer l'amplitude, la fréquence et/ou la phase du signal microonde, et des circuits détecteurs (24A, 24B) synchronisés avec le signal appliqué à l'antenne et/ou à une impédance de référence.

14. Dispositif selon l'une quelconque des revendications 12 et 13, caractérisé en ce que le bloc de mesure d'antenne (20) et le bloc d'étalonnage de fréquence (21) comprennent chacun un réflectomètre, le bloc de mesure d'antenne (20) contenant un circuit de duplexeur (31) branché à l'antenne (11), tandis que, dans le bloc d'étalonnage de fréquence (21), un circuit de duplexeur est branché à un élément d'impédance de référence dépendant de la fréquence.

FIG. 1

FIG. 2

**FIG. 3**

Figure labels: antenna (11), functional control (23), microwave generator (18), phase shift control (26), power devider (19), antenna measurement (20), detection unit A (24A), frequency calibrating (21), detection unit B (24B), measurement frequency control (22), reference impedance (25), (channel A), (channel B), data handling (28), signal handling (29), detecting central unit (14), 12, 13

3

FIG. 4

0 138 940

From
powerdevider    · 19

FIG. 5

From data handling circuit 28

channel B

channel A

33

measurement
frequency
calculating

(f)

34

interpolation

35

Fourier
transformation

36

distance
calculating

To
detection central 14

FIG.6